# EUROPÄISCHE PATENTSCHRIFT

(11) **EP 1 703 168 B1**
(45) Veröffentlichungstag und Bekanntmachung des Hinweises auf die Patenterteilung: **14.05.2008**
(21) Anmeldenummer: 06005033.3
(22) Anmeldetag: 13.03.2006
(51) Int. Cl.: F16G 13/16

(54) **Energieführungskette**
Supporting chain for energy carriers
Chaîne porteuse pour lignes de transport d'énergie

(30) Priorität: 14.03.2005 DE 102005011934
(43) Veröffentlichungstag der Anmeldung: 20.09.2006
(73) Patentinhaber: Murrplastik Systemtechnik GmbH, 71570 Oppenweiler (DE)
(72) Erfinder:
(74) Vertreter: Reule, Hanspeter

(56) Entgegenhaltungen:
- EP-A2- 1 267 094
- DE-U1- 29 607 492

## Beschreibung

Die Erfindung betrifft eine Energieführungskette gemäß Oberbegriff des Anspruchs 1.

Bekannte Energieführungsketten weisen mehrere aneinandergereihte Kettenglieder auf, die je zwei miteinander verbundene Seitenglieder aufweisen. Diese können mittels lösbaren oder angeformten Rahmenstegen miteinander verbunden sein. An jeder Seite der Energieführungskette sind Seitenglieder in Kettenlängsrichtung aneinandergereiht und miteinander drehbeweglich verbunden. Durch die drehbewegliche Verbindung sind zwei aufeinanderfolgende, miteinander verbundene Seitenglieder um einen maximalen Verdrehwinkel gegeneinander verdrehbar. Der maximale Verdrehwinkel wird durch Endpositionen der beiden gegeneinander verdrehbaren Seitenglieder festgelegt. An den Endpositionen liegen Bauteile der Seitenglieder aneinander an und verhindern eine weitere Verdrehung der Seitenglieder gegeneinander. Nachteilig an den bekannten Energieführungsketten ist das harte Auftreffen der miteinander verbundenen Seitenglieder, wenn diese in eine Endposition verdreht werden. Zum einen entsteht durch das harte Auftreffen der in der Endposition aneinander anliegenden Bauteile der Seitenglieder ein oft als störend empfundenes Geräusch. Zum anderen erzeugt das harte Auftreffen mechanische Schwingungen in der Energieführungskette, die im Bereich der freitragenden Länge besonders bemerkbar sind. Insbesondere bei hohen Verfahrgeschwindigkeiten schwingt die Energieführungskette durch Überlagerung der durch das Anschlagen erzeugten Schwingungen mit so großen Amplituden, dass die Genauigkeit bei der Einstellung des Verfahrwegs eingeschränkt ist.

Eine Energieführungskette der eingangs genannten Art ist aus der DE 296 07 492 U1 bekannt. Sie weist Anschlagselemente in Form von direkt an den Seitengliedern angeformten Federlippen auf, die gegen eine elastische Rückstellkraft auslenkbar sind und das Auftreffen der miteinander verbundenen Seitenglieder dämpfen.

Es ist daher Aufgabe der Erfindung, eine Energieführungskette der eingangs genannten Art derart weiterzubilden, dass die beim Verfahren auftretenden Schwingungen vermindert oder ganz vermieden werden.

Die Aufgabe wird erfindungsgemäß durch eine Energieführungskette mit den Merkmalen des Patentanspruchs 1 gelöst. Vorteilhafte Weiterbildungen der Erfindung sind Gegenstand der abhängigen Ansprüche.

Der Erfindung liegt der Gedanke zugrunde, dass die aufeinanderfolgenden Seitenglieder vor Erreichen der Endpositionen beim Verdrehen abgebremst werden. Dadurch fällt der Anschlag der Seitenglieder aneinander beim Erreichen der Endposition weniger hart aus, so dass zum einen die Geräuschentwicklung gedämpft ist, zum anderen aber auch die Energieführungskette weniger zu Schwingungen angeregt wird. Dies ermöglicht ein präziseres Verfahren der Energieführungskette und vermindert gleichzeitig den Verschleiß der in ihr verlegten Leitungen.

Gemäß der Erfindung ist das mindestens eine Anschlagelement an einem freien Ende eines Auslegerarms angebracht, der mit seinem dem Anschlagelement abgewandten Ende am ersten Seitenglied festgelegt ist. Die elastische Rückstellkraft resultiert aus einer elastischen Verbiegung des Auslegerarms. Der Auslegerarm ist zweckmäßig in einer Ausnehmung im ersten Seitenglied aufgenommen und in der Aufnehmung frei beweglich. Die Ausnehmung erstreckt sich vorzugsweise über die gesamte Länge des Auslegerarms und weitet sich zum Anschlagelement hin auf. Der Auslegerarm ist damit nur innerhalb des durch die Ausnehmung vorgegebenen Spielraums verformbar. Eine übermäßige Belastung, die zu seiner Beschädigung führen könnte, wird dadurch weitgehend vermieden. An seinem das Anschlagelement tragenden freien Ende ist der Auslegerarm weiter aus seiner Ruhelage auslenkbar als am dem Anschlagelement abgewandten Ende.

Es wird bevorzugt, dass am ersten Seitenglied ein erstes und ein zweites Anschlagelement angebracht ist, welche jeweils in einer Führung im zweiten Seitenglied bis zu einer Anschlagposition beweglich sind, wobei die beiden Seitenglieder bei in seiner Anschlagposition befindlichem ersten Anschlagelement gegen dessen elastische Rückstellkraft bis zu ihrer einen Endposition und bei in seiner Anschlagposition befindlichem zweiten Anschlagelement gegen dessen elastische Rückstellkraft bis zu ihrer anderen Endposition weiter gegeneinander verdrehbar sind. Die beiden Seitenglieder werden dann sowohl vor Erreichen der einen Endposition als auch vor Erreichen der anderen Endposition in ihrer relativen Drehbewegung abgebremst. Dabei wird das Abbremsen vor Erreichen der ersten Endposition durch das erste Anschlagelement und das Abbremsen vor Erreichen der zweiten Endposition durch das zweite Anschlagelement erzielt. Die Auslegerarme, an denen die Anschlagelemente angebracht sind, werden dabei jeweils nur in eine Richtung elastisch verformt, was zu weniger Verschleiß führt als eine Wechselverformung. Die beiden Auslegerarme können unterschiedlich lang sein, abhängig davon, wie viel Platz in den Seitengliedern für ihre Aufnahme zur Verfügung steht. Es wird jedoch bevorzugt, dass das erste und das zweite Anschlagelement punktsymmetrisch bezüglich eines Punkts auf der Drehachse des ersten und des zweiten Seitenglieds angeordnet sind. Sie sind vorteilhaft mittels ihrer Auslegerarme an einem zentralen Ring angebracht, der in einer Aufnahmevertiefung im ersten Seitenglied aufgenommen ist. Vorzugsweise sind das erste und das zweite Anschlagelement, die Auslegerarme und der Ring als einstückig zusammenhängendes Spritzgussteil ausgebildet.

Gemäß einer alternativen Ausführungsform sind das erste und das zweite Anschlagelement mittels ihrer Auslegerarme an einer Trägerplatte angeformt, die am ersten Seitenglied lösbar befestigt ist. Die Trägerplatte weist vorteilhaft einen Verbindungszapfen zur drehbeweglichen Verbindung des ersten Seitenglieds mit dem zweiten Seitenglied auf. Sie dient somit nicht nur der Dämpfung der Verdrehbewegung der Seitenglieder gegeneinander vor Erreichen der Endposition, sondern auch der Verbindung der beiden Seitenglieder miteinander. Zweckmäßig sind die Trägerplatte, das erste und das zweite Anschlagelement, die Auslegerarme und gegebenenfalls der Verbindungszapfen als einstückig zusammenhängendes Spritzgussteil ausgebildet.

Es ist möglich, mindestens eine der Endpositionen durch Anlage einer äußeren Kante des ersten Seitenglieds an einer äußeren Kante des zweiten Seitenglieds festzulegen. Die Endpositionen werden dann erreicht, wenn die beiden Kanten aneinander anstoßen. Gemäß einem bevorzugten Ausführungsbeispiel ist jedoch am ersten Seitenglied mindestens ein starr mit ihm verbundenes Endanschlagelement angebracht, das in einer weiteren Führung im zweiten Seitenglied bis zu mindestens einer Endanschlagposition beweglich ist, wobei die Endanschlagposition des Endanschlagelements eine der Endpositionen festlegt. Das mindestens eine Endanschlagelement kann einstückig am ersten Seitenglied angeformt sein. Es wird jedoch bevorzugt, dass es an der Trägerplatte angeformt ist. Der maximale Verdrehwinkel kann dann auf einfache Weise dadurch variiert werden, dass die Trägerplatte durch eine andere Trägerplatte ersetzt wird, deren Endanschlagelemente eine andere Geometrie aufweisen und somit einen anderen maximalen Verdrehwinkel festlegen. Im Gegensatz zu den als aktive Anschlagelemente bezeichneten, gegen die elastische Rückstellkraft auslenkbaren Anschlagelementen werden die starren Endanschlagelemente als passive Anschlagelemente bezeichnet.

lm Folgenden wird die Erfindung anhand eines in der Zeichnung schematisch dargestellten Ausführungsbeispiels näher erläutert. Es zeigen
- Fig. 1a: ein Seitenglied gemäß eines ersten Ausführungsbeispiels in perspektivischer Darstellung;
- Fig. 1b: eine Seitenansicht des Seitenglieds gemäß Fig. 1a;
- Fig. 2: eine Dämpfungseinrichtung mit zwei Anschlagelementen für das Seitenglied gemäß Fig. 1a bzw. 1b;
- Fig. 3: zwei miteinander verbundene baugleiche Seitenglieder gemäß Fig. 1a bzw. 1 b;

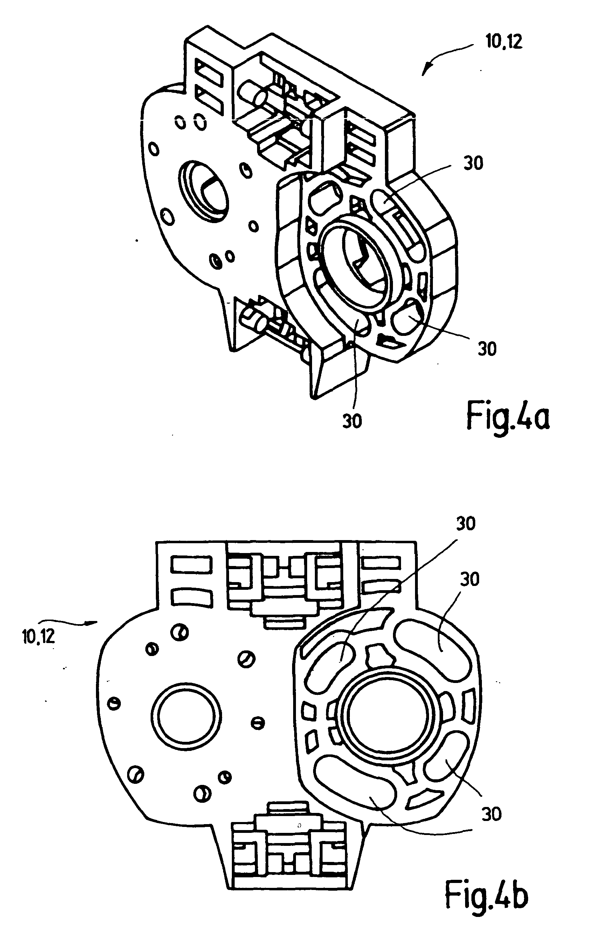

- Fig. 4a: ein Seitenglied gemäß eines zweiten Ausführungsbeispiels in perspektivischer Darstellung;
- Fig. 4b: eine Seitenansicht des Seitenglieds gemäß Fig. 4a;
- Fig. 5: eine Dämpfungseinrichtung für das Seitenglied gemäß Fig. 4a bzw. 4b und
- Fig. 6: zwei miteinander verbundene Seitenglieder gemäß Fig. 4a bzw. 4b.

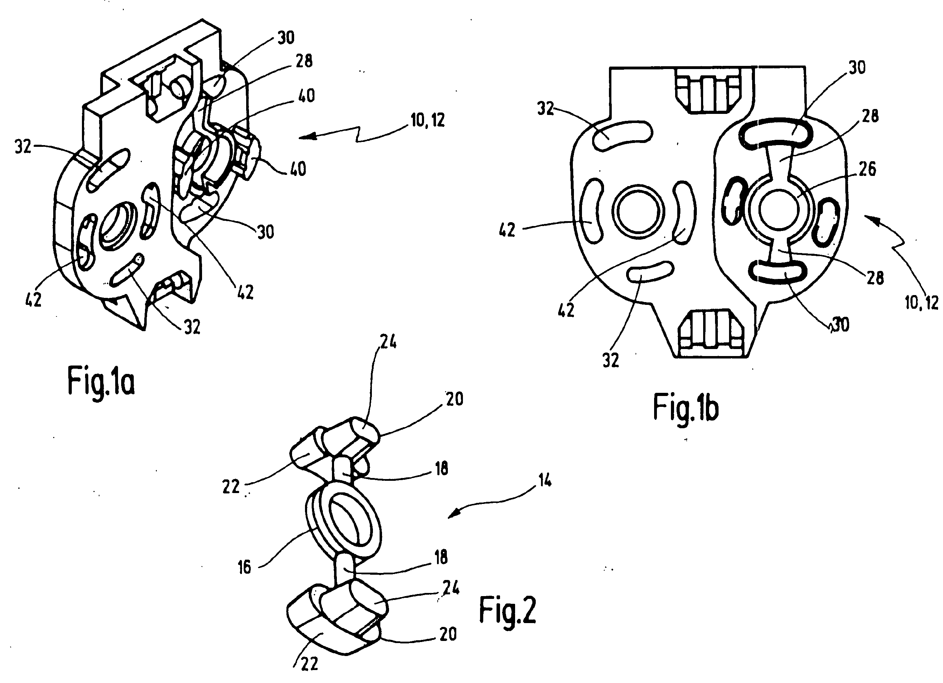

Eine Energieführungskette gemäß einem ersten Ausführungsbeispiel besteht aus aneinandergereihten Kettengliedern, die jeweils zwei mittels Rahmenstegen verbundene Seitenglieder gemäß Fig. 1a, 1b aufweisen. Jede der beiden Seiten der Energieführungskette wird somit durch baugleiche aneinandergereihte Seitenglieder 10, 12 gebildet. Diese sind drehbeweglich miteinander verbunden und können bis zu einem maximalen Verdrehwinkel zwischen zwei Endpositionen gegeneinander verdreht werden.

Um ein hartes Anschlagen zweier gegeneinander verdrehbarer Seitenglieder 10, 12 beim Erreichen der Endpositionen zu vermeiden, ist an einem ersten Seitenglied 10 gemäß Fig. 1a eine Dämpfungseinrichtung 14 gemäß Fig. 2 angebracht. Die Dämpfungseinrichtung 14 weist einen zentralen Ring 16 auf, von dem sich in radialer Richtung zwei Auslegerarme 18 erstrecken, welche einen Winkel von 180° einschließen. An den freien Enden der Auslegerarme 18 sind Anschlagelemente 20 angeformt, welche jeweils eine erste Partie 22 mit größeren Abmessungen sowie eine aus der ersten Partie 22 hervorstehende, kleinere zweite Partie 24 aufweisen. Zur Aufnahme der Dämpfungseinrichtung 14 weist das erste Seitenglied 10 eine Aufnahmevertiefung 26 für den zentralen Ring 16 sowie sich von der ringförmigen Aufnahmevertiefung 26 radial erstreckende Ausnehmungen 28 auf, in welche die Auslegerarme 18 eingelegt werden. Die Ausnehmungen 28 weiten sich mit zunehmendem Abstand von der Aufnahmevertiefung 26 für den Ring 16 auf, so dass die Auslegerarme 18 in Richtung zu den Anschlagelementen 20 einen zunehmenden Spielraum haben. An die Aufnahmevertiefung 26 angrenzend haben die Ausnehmungen 28 eine Breite, die im wesentlichen der Breite der Auslegerarme 18 entspricht, so dass diese dort festgelegt sind. Die ersten Partien 22 der Anschlagelemente 20 sind in Durchbrechungen 30 im ersten Seitenglied 10 aufgenommen, in denen sie ebenfalls Spiel haben, das dem Spiel der Auslegerarme 18 in den Ausnehmungen 28 entspricht.

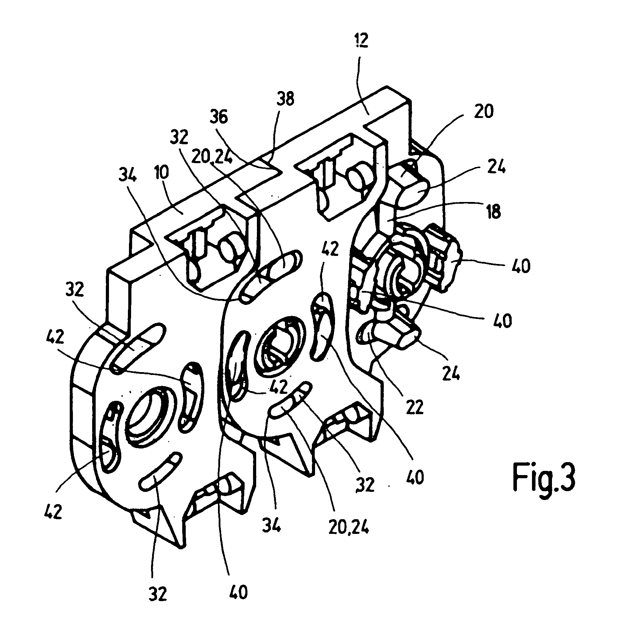

Die Seitenglieder 10, 12 weisen desweiteren zwei Führungen 32 auf, die für die Aufnahme der zweiten Partien 24 der Anschlagelemente 20 bestimmt sind. Die zweiten Partien 24 der Anschlagelemente 20 der am ersten Seitenglied 10 angebrachten Dämpfungseinrichtung 14 greifen in die Führungen 32 des mit dem ersten Seitenglied 10 drehbeweglich verbundenen zweiten Seitenglieds 12 ein, wie aus Fig. 3 ersichtlich, und sind in diesen Führungen 32 bis zu einer Anschlagposition 34 beweglich. Beim Verschwenken der Seitenglieder 10, 12 gegeneinander erreicht eines der Anschlagelemente 20 seine Anschlagposition 34, bevor die Seitenglieder 10, 12 ihre Endposition erreichen. Ein weiteres Verdrehen der Seitenglieder 10, 12 gegeneinander bis zur Endposition erfolgt dann gegen eine elastische Rückstellkraft, die aus einem Verbiegen des das Anschlagelement 20 tragenden Auslegerarms 18 resultiert. Auf diese Weise wird die relative Drehbewegung der Seitenglieder 10, 12 vor Erreichen der Endposition abgebremst, so dass der Anschlag der Seitenglieder 10, 12 in der Endposition weniger hart ausfällt. Da die Anschlagelemente 20 bis zu einem gewissen Grad gegen das erste Seitenglied 10 beweglich sind, werden sie als aktive Anschlagelemente bezeichnet.

Wie in Fig. 3 gezeigt, ist eine der Endpositionen dadurch gegeben, dass eine Kante 36 des ersten Seitenglieds 10 an einer Kante 38 des zweiten Seitenglieds 12 zur Anlage kommt. Zusätzlich sind am ersten Seitenglied 10 zwei Endanschlagelemente 40 starr angeformt, die in weiteren Führungen 42 im zweiten Seitenglied 12 beweglich sind. Die Bewegung der Endanschlagelemente 40 in den weiteren Führungen 42 wird durch Endanschlagpositionen begrenzt, die die Endpositionen beim Verschwenken der Seitenglieder 10, 12 festlegen. Die starren Endanschlagelemente 40 werden als passive Anschlagelemente bezeichnet. Beim Ausführungsbeispiel gemäß Fig. 3 ist eine Endposition somit sowohl durch die Anlage der Kanten 36, 38 der Seitenglieder 10, 12 aneinander als auch durch den Anschlag der Endanschlagelemente 40 in den weiteren Führungen 42 festgelegt. Dabei liegt das untere der beiden Anschlagelemente 20 in seiner Anschlagposition 34 in der Führung 32 im zweiten Seitenglied 12. Aus dieser Endposition können die Seitenglieder 10, 12 gegeneinander verdreht werden, bis die Endanschlagelemente 40 an den gegenüberliegenden Anschlägen in den weiteren Führungen 42 anliegen. Bevor die so definierte Endposition erreicht wird, kommt das obere der Anschlagelemente 20 in seiner Anschlagposition 34 mit der oberen Führung 32 im zweiten Seitenglied 12 in Anlage und bremst die Drehbewegung. Beim Abbremsen der Drehbewegungen wird jeder der beiden die Anschlagelemente 20 tragenden Auslegerarme 18 stets nur in eine Richtung verbogen. Seine Verformung erfolgt schwellend und nicht dynamisch, also in verschiedene Richtungen wechselnd.

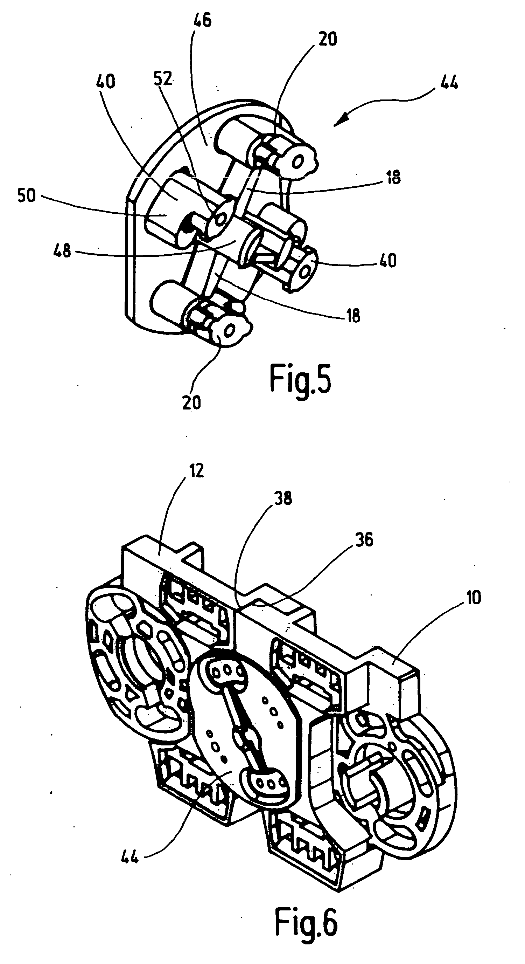

Das zweite Ausführungsbeispiel unterscheidet sich vom ersten Ausführungsbeispiel in der Ausgestaltung der Dämpfungseinrichtung 44. Diese weist gemäß Fig. 5 eine Trägerplatte 46 auf, an der ein Verbindungszapfen 48 angeformt ist. Durch den Verbindungszapfen 48 verläuft die Drehachse, um die die Drehbewegung des ersten Seitenglieds 10 gegen das zweite Seitenglied 12 ausgeführt wird. Der Verbindungszapfen 48 durchgreift das erste und das zweite Seitenglied 10, 12 und stellt deren drehbewegliche Verbindung her. An der Trägerplatte 46 sind auch die die Anschlagelemente 20 tragenden Auslegerarme 18 angeformt. Diese erstrecken sich punktsymmetrisch bezüglich eines Punkts auf der Drehachse. Desweiteren sind auch die starren Endanschlagelemente 40 an der Trägerplatte 46 angeformt. Beim Zusammenfügen des ersten und des zweiten Seitenglieds 10, 12 greifen die Anschlagelemente 20 und die Endanschlagelemente 40 durch Durchbrechungen 30 im ersten Seitenglied 10 durch und sind wiederum in Führungen im zweiten Seitenglied 12 beweglich. Die Endanschlagelemente 40 weisen hier ebenfalls eine erste Partie 50 auf, die passgenau in eine Durchbrechung 30 im ersten Seitenglied 10 eingreift, sowie eine über die erste Partie 50 hervorstehende zweite Partie 52, die in einer Führung im zweiten Seitenglied 12 geführt ist. Die Funktionsweise der Dämpfungseinrichtung 44 gemäß Fig. 5 ist identisch mit der Funktionsweise der Dämpfungseinrichtung 14 gemäß dem ersten Ausführungsbeispiel. Vor Erreichen einer Endposition, die durch einen Anschlag der Endanschlagelemente 40 in den sie aufnehmenden Führungen 42 im zweiten Seitenglied 12 festgelegt- ist, gelangt eines der Anschlagelemente 20 in eine Anschlagposition, in der es an der Innenseite einer der Führungen anliegt. Ein weiteres Verdrehen der Seitenglieder 10, 12 gegeneinander bis zur Endposition erfolgt dann durch Verbiegen des das Anschlagelement 20 tragenden Auslegerarms 18.

Beide Ausführungsbeispiele haben die Gemeinsamkeit, dass die Dämpfungseinrichtungen 14, 44 einstückig als Spritzgussteil aus Kunststoff gefertigt sind.

Zusammenfassend ist folgendes festzuhalten:

Die Erfindung betrifft eine Energieführungskette mit mehreren aneinandergereihten Kettengliedern, die je zwei miteinander verbundene Seitenglieder aufweisen, wobei mindestens ein erstes Seitenglied 10 und ein in Kettenlängsrichtung auf das erste Seitenglied 10 folgendes zweites Seitenglied 12 um einen maximalen Verdrehwinkel zwischen zwei Endpositionen gegeneinander verdrehbar miteinander verbunden sind und wobei am ersten Seitenglied 10 mindestens ein Anschlagelement 20 angebracht ist, das bis zu einer Anschlagposition 34 in einer Führung 32 im zweiten Seitenglied 12 beweglich ist. Erfindungsgemäß ist vorgesehen, dass das mindestens eine Anschlagelement 20 in Verdrehrichtung gegen eine elastische Rückstellkraft auslenkbar am ersten Seitenglied 10 angebracht ist und dass das erste und das zweite Seitenglied 10, 12 bei in seiner Anschlagposition 34 befindlichem Anschlagelement 20 gegen die elastische Rückstellkraft bis zu einer der Endpositionen weiter gegeneinander verdrehbar sind.

## Patentansprüche

1. Energieführungskette mit mehreren aneinander gereihten Kettengliedem, die je zwei miteinander verbundene Seitenglieder aufweisen, wobei mindestens ein erstes Seitenglied (10) und ein in Kettenlängsrichtung auf das erste Seitenglied (10) folgendes zweites Seitenglied (12) um einen maximalen Verdrehwinkel zwischen zwei Endpositionen gegeneinander verdrehbar miteinander verbunden sind, wobei am ersten Seitenglied (10) mindestens ein Anschlagelement (20) angebracht ist, das bis zu einer Anschlagposition (34) in einer Führung (32) im zweiten Seitenglied (12) beweglich ist, wobei das mindestens eine Anschlagelement (20) in Verdrehrichtung gegen eine elastische Rückstellkraft auslenkbar am ersten Seitenglied (10) angebracht ist und wobei das erste und das zweite Seitenglied (10, 12) bei in seiner Anschlagposition (34) befindlichem Anschlagelement (20) gegen die elastische Rückstellkraft bis zu einer der Endpositionen weiter gegeneinander verdrehbar sind, **dadurch gekennzeichnet, dass** das mindestens eine Anschlagelement (20) an einem freien Ende eines Auslegerarms (18) angebracht ist, der mit seinem dem Anschlagelement (20) abgewandten Ende am ersten Seitenglied (10) festgelegt ist, wobei die elastische Rückstellkraft aus einem Verbiegen des Auslegerarms (18) resultiert.

2. Energieführungskette nach Anspruch 1, **dadurch gekennzeichnet, dass** der Auslegerarm (18) in einer Ausnehmung (28) im ersten Seitenglied (10) aufgenommen ist und in der Ausnehmung (28) beweglich ist.

3. Energieführungskette nach Anspruch 2, **dadurch gekennzeichnet, dass** sich die Ausnehmung (28) über die gesamte Länge des Auslegerarms (18) erstreckt und sich zum Anschlagelement (20) hin aufweitet.

4. Energieführungskette nach einem der vorangehenden Ansprüche, **dadurch gekennzeichnet, dass** am ersten Seitenglied (10) ein erstes und ein zweites Anschlagelement (20) angebracht ist, welche jeweils in einer Führung (32) im zweiten Seitenglied (12) bis zu einer Anschlagposition (34) beweglich sind, wobei die beiden Seitenglieder (10, 12) bei in seiner Anschlagposition (34) befindlichem ersten Anschlagelement (20) gegen dessen elastische Rückstellkraft bis zu ihrer einen Endposition und bei in seiner Anschlagposition (34) befindlichem zweiten Anschlagelement (20) gegen dessen elastische Rückstellkraft bis zu ihrer anderen Endposition weiter gegeneinander verdrehbar sind.

5. Energieführungskette nach Anspruch 4, **dadurch gekennzeichnet, dass** das erste und das zweite Anschlagelement (20) punktsymmetrisch bezüglich eines Punkts auf der Drehachse des ersten und des zweiten Seitenglieds (10, 12) angeordnet sind.

6. Energieführungskette nach einem der Ansprüche 4 oder 5, **dadurch gekennzeichnet, dass** das erste und das zweite Anschlagelement (20) mittels ihrer Auslegerarme (18) an einem zentralen Ring (16) angebracht sind und dass der Ring (16) in einer Aufnahmevertiefung (26) im ersten Seitenglied (10) aufgenommen ist.

7. Energieführungskette nach Anspruch 6, **dadurch gekennzeichnet, dass** das erste und das zweite Anschlagelement (20), die Auslegerarme (18) und der Ring (16) als einstückig zusammenhängendes Spritzgussteil (14) ausgebildet sind.

8. Energieführungskette nach Anspruch 4 oder 5, **dadurch gekennzeichnet, dass** das erste und das zweite Anschlagelement (20) mittels ihrer Auslegerarme (18) an einer Trägerplatte (46) angeformt sind, die am ersten Seitenglied (10) lösbar befestigt ist.

9. Energieführungskette nach Anspruch 8, **dadurch gekennzeichnet, dass** die Trägerplatte (46) einen Verbindungszapfen (48) zur drehbeweglichen Verbindung des ersten Seitenglieds (10) mit dem zweiten Seitenglied (12) aufweist.

10. Energieführungskette nach einem der Ansprüche 8 oder 9, **dadurch gekennzeichnet, dass** die Trägerplatte (46), das erste und das zweite Anschlagelement (20), die Auslegerarme (18) und gegebenenfalls der Verbindungszapfen (48) als einstückig zusammenhängendes Spritzgussteil (44) ausgebildet sind.

11. Energieführungskette nach einem der vorangehenden Ansprüche, **dadurch gekennzeichnet, dass** mindestens eine der Endpositionen durch Anlage einer Kante (36) des ersten Seitenglieds (10) an einer Kante (38) des zweiten Seitenglieds (12) festgelegt ist.

12. Energieführungskette nach einem der vorangehenden Ansprüche, **dadurch gekennzeichnet, dass** am ersten Seitenglied (10) mindestens ein starr mit ihm verbundenes Endanschlagelement (40) angebracht ist, das in einer weiteren Führung (42) im zweiten Seitenglied (12) bis zu mindestens einer Endanschlagposition beweglich ist, wobei die Endanschlagposition des weiteren Anschlagelements (40) eine der Endpositionen festlegt.

13. Energieführungskette nach Anspruch 12, **dadurch gekennzeichnet, dass** das mindestens eine Endanschlagelement (40) am ersten Seitenglied (10) einstückig angeformt ist.

14. Energieführungskette nach Anspruch 12 und nach einem der Ansprüche 8 bis 10, **dadurch gekennzeichnet, dass** das mindestens eine Endanschlagelement (40) an der Trägerplatte (46) einstückig angeformt ist.

## Claims

1. Cable drag chain with a plurality of chain links arranged alongside each other, each of which has two side links connected together, wherein at least one first side link (10) and one second side link (12) following the first side link (10) in the longitudinal chain direction are connected to each other so that they can be displaced towards each other about a maximum angle of displacement between two end positions, wherein at least one stop element (20) is fitted on the first side link (10), which element is movable as far as a stop position (34) in a guide (32) in the second side link (12), wherein the at least one stop element (20) is fitted on the first side link (10) so that it can be deflected in the direction of displacement against an elastic readjusting force, and wherein the first and the second side links (10, 12) are further displaceable towards each other against the elastic readjusting force as far as one of the end positions when the stop element (20) is in its stop position (34), **characterised in that** the at least one stop element (20) is fitted to one free end of a radial arm (18) which is fixed to the first side link (10) with its end facing away from the stop element (20), wherein the elastic readjusting force results from a distortion of the radial arm (18).

2. Cable drag chain according to Claim 1, **characterised in that** the radial arm (18) is accommodated in a recess (28) in the first side link (10) and is movable in the recess (28).

3. Cable drag chain according to Claim 2, **characterised in that** the recess (28) extends throughout the length of the radial arm (18) and widens towards the stop element (20).

4. Cable drag chain according to any one of the preceding claims, **characterised in that** a first and a second stop element (20) are fitted on the first side link (10), which elements in each case are movable in a guide (32) in the second side link (12) as far as a stop position (34), wherein the two side links (10, 12) are further displaceable towards each other when the first stop element (20) is in its stop position (34) against its elastic readjusting force as far as their one end position and when the second stop element (20) is in its stop position (34), against its elastic readjusting force as far as their other end position.

5. Cable drag chain according to Claim 4, **characterised in that** the first and second stop elements (20) are arranged point symmetrically in relation to a point on the axis of rotation of the first and second side links (10, 12).

6. Cable drag chain according to either one of Claims 4 and 5, **characterised in that** the first and the second stop elements (20) are fitted on a central ring (16) by means of their radial arms (18), and **in that** the ring (16) is accommodated in a receiving recess (26) in the first side link (10).

7. Cable drag chain according to Claim 6, **characterised in that** the first and the second stop elements (20), the radial arms (18) and the ring (16) are designed in one piece as a coherent injection moulding (14).

8. Cable drag chain according to Claim 4 or 5, **characterised in that** the first and the second stop elements (20) are formed by means of their radial arms (18) on a support plate (46) which is releasably fastened to the first side link (10).

9. Cable drag chain according to Claim 8, **characterised in that** the support plate (46) has a connecting pin (48) for the rotatably movable connection of the first side link (10) to the second side link (12).

10. Cable drag chain according to either one of Claims 8 and 9, **characterised in that** the support plate (46), the first and second stop elements (20), the radial arms (18) and, if necessary, the connecting pin (48), are designed in one piece as a coherent injection moulding (44).

11. Cable drag chain according to any one of the preceding claims, **characterised in that** at least one of the end positions is established by the contact of one edge (36) of the first side link (10) with one edge (38) of the second side link (12).

12. Cable drag link according to any one of the preceding claims, **characterised in that** on the first side link (10) is fitted at least one end stop element (40) rigidly connected to it, which element is movable in a further guide (42) in the second side link (12) as far as at least one end stop position, wherein the end stop position of the further stop element (40) establishes one of the end positions.

13. Cable drag chain according to Claim 12, **characterised in that** the at least one end stop element (40) is formed in one piece on the first side link (10).

14. Cable drag chain according to Claim 12 and according to any one of Claims 8 to 10, **characterised in that** the at least one end stop element (40) is formed in one piece on the support plate (46).

## Revendications

1. Chaîne de transmission d'énergie comprenant plusieurs maillons mutuellement alignés qui présentent, respectivement, deux organes latéraux reliés l'un à l'autre, sachant qu'au moins un premier organe latéral (10) et un second organe latéral (12), succédant audit premier organe latéral (10) dans la direction longitudinale de la chaîne, sont reliés l'un à l'autre avec faculté de rotation mutuelle entre deux positions extrêmes, selon un angle maximal de rotation ; sachant qu'au moins un élément de butée (20), implanté sur le premier organe latéral (10), est mobile dans un guide (32) façonné dans le second organe latéral (12), jusqu'à une position (34) de venue en butée ; sachant que ledit élément de butée (20), prévu au minimum, est implanté sur le premier organe latéral (10) dans la direction de rotation, avec faculté d'excursion en opposition à une force élastique de rappel ; et sachant que, lorsque ledit élément de butée (20) occupe sa position (34) de venue en butée, les premier et second organes latéraux (10, 12) peuvent poursuivre leur rotation mutuelle jusqu'à l'une des positions extrêmes, en s'opposant à ladite force élastique de rappel, **caractérisée par le fait que** ledit élément de butée (20), prévu au minimum, est implanté à une extrémité libre d'un bras (18) en porte-à-faux qui est consigné à demeure, sur le premier organe latéral (10), par son extrémité tournée à l'opposé dudit élément de butée (20), la force élastique de rappel résultant d'un fléchissement dudit bras (18) en porte-à-faux.

2. Chaîne de transmission d'énergie selon la revendication 1, **caractérisée par le fait que** le bras (18) en porte-à-faux est logé dans un évidement (28) pratiqué dans le premier organe latéral (10), et est mobile dans ledit évidement (28).

3. Chaîne de transmission d'énergie selon la revendication 2, **caractérisée par le fait que** l'évidement (28) s'étend sur toute la longueur du bras (18) en porte-à-faux et s'évase en direction de l'élément de butée (20).

4. Chaîne de transmission d'énergie selon l'une des revendications précédentes, **caractérisée par le fait que** des premier et second éléments de butée (20), implantés sur le premier organe latéral (10), sont respectivement mobiles dans un guide (32) situé dans le second organe latéral (12), jusqu'à une position (34) de venue en butée, sachant que, lorsque le premier élément de butée (20) occupe sa position (34) de venue en butée, les deux organes latéraux (10, 12) peuvent poursuivre leur rotation mutuelle jusqu'à l'une de leurs positions extrêmes, en s'opposant à la force élastique de rappel dudit élément ; et que, lorsque le second élément de butée (20) occupe sa position (34) de venue en butée, lesdits organes peuvent poursuivre leur rotation mutuelle jusqu'à leur autre position extrême, en s'opposant à la force élastique de rappel dudit élément.

5. Chaîne de transmission d'énergie selon la revendication 4, **caractérisée par le fait que** les premier et second éléments de butée (20) sont agencés symétriquement vis-à-vis d'un point situé sur l'axe de rotation des premier et second organes latéraux (10, 12).

6. Chaîne de transmission d'énergie selon l'une des revendications 4 ou 5, **caractérisée par le fait que** les premier et second éléments de butée (20) sont implantés sur un anneau central (16) au moyen de leurs bras (18) en porte-à-faux ; et **par le fait que** ledit anneau (16) est reçu par un réceptacle encaissé (26) façonné dans le premier organe latéral (10).

7. Chaîne de transmission d'énergie selon la revendication 6, **caractérisée par le fait que** les premier et second éléments de butée (20), les bras (18) en porte-à-faux et l'anneau (16) sont réalisés sous la forme d'une pièce monobloc cohérente (14) venue de coulée par injection.

8. Chaîne de transmission d'énergie selon la revendication 4 ou 5, **caractérisée par le fait que** les premier et second éléments de butée (20) font corps, par leurs bras (18) en porte-à-faux, avec une plaque de support (46) fixée amoviblement au premier organe latéral (10).

9. Chaîne de transmission d'énergie selon la revendication 8, **caractérisée par le fait que** la plaque de support (46) présente un tenon de solidarisation (48) en vue de la liaison du premier organe latéral (10) et du second organe latéral (12), avec mobilité rotatoire.

10. Chaîne de transmission d'énergie selon l'une des revendications 8 ou 9, **caractérisée par le fait que** la plaque de support (46), les premier et second éléments de butée (20), les bras (18) en porte-à-faux et, le cas échéant, le tenon de solidarisation (48) sont réalisés sous la forme d'une pièce monobloc cohérente (44) venue de coulée par injection.

11. Chaîne de transmission d'énergie selon l'une des revendications précédentes, **caractérisée par le fait qu'**au moins l'une des positions extrêmes est fermement établie par venue en contact d'une arête (36) du premier organe latéral (10) avec une arête (38) du second organe latéral (12).

12. Chaîne de transmission d'énergie selon l'une des revendications précédentes, **caractérisée par le fait qu'**au moins un élément (40) de butée extrême, implanté sur le premier organe latéral (10) auquel il est relié rigidement, est mobile jusqu'à au moins un emplacement extrême de venue en butée, dans un guide supplémentaire (42) ménagé dans le second organe latéral (12), sachant que ledit emplacement extrême de venue en butée dudit élément de butée supplémentaire (40) établit fermement l'une des positions extrêmes.

13. Chaîne de transmission d'énergie selon la revendication 12, **caractérisée par le fait que** l'élément (40) de butée extrême, prévu au minimum, est ménagé d'un seul tenant avec le premier organe latéral (10).

14. Chaîne de transmission d'énergie selon la revendication 12 et selon l'une des revendications 8 à 10, **caractérisée par le fait que** l'élément (40) de butée extrême, prévu au minimum, est façonné d'un seul tenant avec la plaque de support (46).
